# EUROPEAN PATENT APPLICATION

(11) **EP 4 414 599 A1**
(43) Date of publication of application: **14.08.2024**
(21) Application number: 22878135.7
(22) Date of filing: 31.03.2022
(51) Int. Cl.: F17C 1/06, B29C 70/16, B29C 70/32, F16J 12/00, F17C 1/16

(54) **CONTAINER FOR HIGH PRESSURE GAS**

(30) Priority: 07.10.2021 JP 2021165766
(71) Applicant: Space Walker, Inc., Tokyo, 105-0004 (JP)
(72) Inventor: YAMAMOTO, Mutsuya, Kure-shi, Hiroshima 737-0141 (JP); SHOHARA, Futoshi, Kure-shi, Hiroshima 737-0923 (JP); NAKAMURA, Masatoshi, Kure-shi, Hiroshima 737-0134 (JP); KAWASHIMA, Yuji, Hirado-shi, Nagasaki 859-4812 (JP)
(74) Representative: Berggren Oy
(86) International application number: PCT/JP2022/016920
(87) International publication number: WO 2023/058262

(57) **Abstract**

A high pressure gas container includes a resin liner that is formed with a hollow portion for filling gas in an interior thereof, a boss that is provided at the resin liner to fill gas through an interior thereof, a reinforcement layer that covers the resin liner, and a seal ring that is provided at the boss and that contacts the resin liner and seals against the resin liner. The resin liner includes a portion that faces the hollow portion and that is formed from a first resin material, and a location where the seal ring contacts that is formed from a second resin material less liable to undergo compression deformation than the first resin material.

## Description

### Technical Field

The present disclosure relates to a high pressure gas container.

### Background Art

A known structure for a high pressure gas container includes a liner made from resin at the inside of a reinforcement layer (see, for example, Japanese Patent Application Laid-Open (JP-A) No. 2013-002492).

A boss used for gas filling is provided at the resin liner.

### SUMMARY OF INVENTION

### Technical Problem

When gas is filled at a particularly high pressure into a high pressure gas container, sometimes the gas inside the container leaks out from the container through an interface between the boss and the resin.

Moreover, when an extremely high pressure acts on the resin material of the liner, such as for example 100 MPa or the like, sometimes the volume of the resin material is reduced thereby. Polyethylene is, for example, employed as the resin material.

Sometimes as a high pressure gas container, a seal ring is provided between the boss and the resin material to prevent leakage of gas. In a high pressure gas container including a seal ring and a resin liner, when there is a repeated rise in internal pressure due to filling with gas and fall in internal pressure due to using the gas, sometimes a permanent distortion arises in the resin material at a portion contacted by the seal ring, with the shape of the resin material no longer returning to its original shape.

If the shape of the resin material no longer returns to its original shape, then sometimes the sealing performance between the seal ring and the resin material falls, letting gas pass through between the seal ring and the resin.

A boss is integrally molded with the resin material and they are in close contact with each other, however they are not adhered to each other. This means that if gas passes through a gap between the seal ring and the resin material, then the high pressure gas sometimes able to leak out from the container through between the boss and the resin material. Moreover, because the reinforcement layer does not consider gas barrier properties, any gas that has passed through the gap between the seal ring and the resin material sometimes also permeates through the resin liner, and leaks out from the container.

An object of the present disclosure is to provide a high pressure gas container capable of suppressing gas from leaking when there is repeated rises and falls in internal pressure.

### Solution to Problem

A high pressure gas container of an embodiment of the present disclosure includes a resin liner that is formed with a hollow portion for filling gas in an interior thereof, a boss that is provided at the resin liner to fill gas through an interior thereof, a reinforcement layer that covers the resin liner, and a seal ring that is provided at the boss and that contacts the resin liner and seals against the resin liner. The resin liner includes a portion that faces the hollow portion and that is formed from a first resin material, and a location where the seal ring contacts that is formed from a second resin material less liable to undergo compression deformation than the first resin material.

The high pressure gas container of the embodiment of the present disclosure enables gas leakage to be suppressed from occurring when there are repeated rises and falls in internal pressure.

### BRIEF DESCRIPTION OF DRAWINGS

Fig. 1 is a side view partial cross-section illustrating a high pressure gas container according to an exemplary embodiment of the present disclosure.
Fig. 2 is a cross-section illustrating a vicinity of a boss.
Fig. 3 is an enlarged cross-section illustrating a portion in the vicinity of a boss.
Fig. 4 is a cross-section illustrating a vicinity of a boss of a high pressure gas container according to a comparative example.

### DESCRIPTION OF EMBODIMENTS

### Exemplary Embodiment

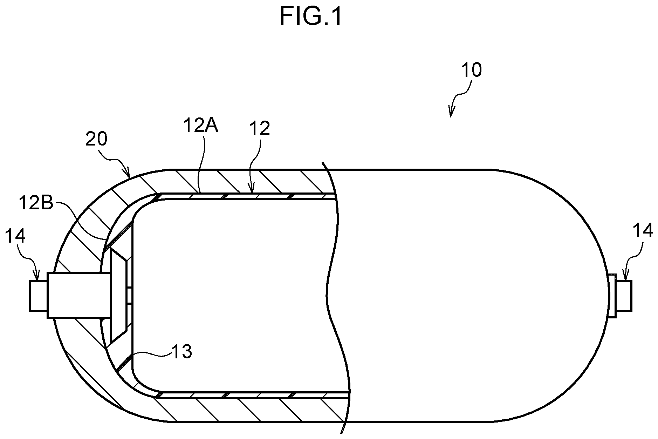

Description follows regarding a high pressure gas container 10 according to an exemplary embodiment of the present disclosure, with reference to Fig. 1 to Fig. 3.

As illustrated in Fig. 1, the high pressure gas container 10 of the present exemplary embodiment includes a resin liner 12 having a hollow structure and including a circular cylindrical shaped body portion 12A, and dome shaped heads 12B contiguous at the two axial direction sides of the body portion 12A. The resin liner 12 is formed from a resin material having gas barrier properties.

The resin liner 12 has a portion facing the hollow portion formed with a first resin material 13. Note that one portion of the resin liner 12 is formed with a second resin material 15 (described in detail later).

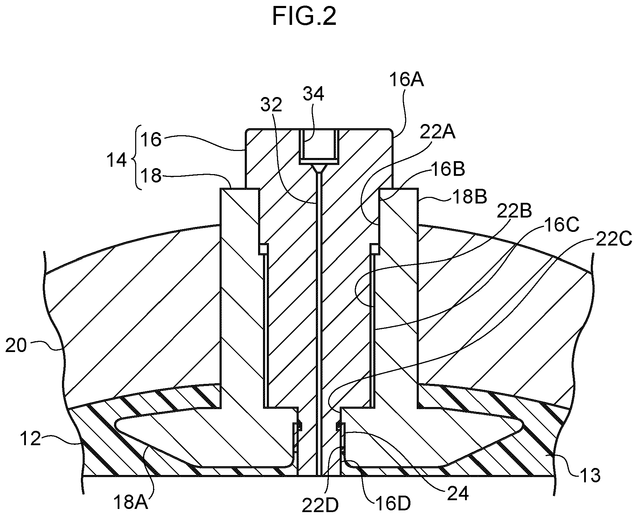

A mouthpiece 14 is provide at an axial core portion of each of the heads 12B so as to project out toward the container outside. Note that the mouthpiece is also called a boss. As illustrated in Fig. 1 and Fig. 2, the mouthpieces 14 of the present exemplary embodiment are each configured from a first mouthpiece member 16, and a second mouthpiece member 18.

The first mouthpiece member 16 is inset molded when molding the resin liner 12. Moreover, the second mouthpiece member 18 is attached after the resin liner 12 has been molded.

Note that each of the mouthpieces 14 of the present exemplary embodiment (the first mouthpiece member 16 and the second mouthpiece member 18) is formed using a metal material such as stainless steel or the like, however the mouthpieces may be formed from a non-metallic material such a ceramic or the like.

The resin liner 12 is, for example, covered in a strengthening fiber reinforcement layer 20 formed by winding strengthening fibers such as carbon fibers or the like that have been impregnated with a resin.

As illustrated in Fig. 2, the first mouthpiece member 16 includes a circular disk shaped flange portion 18A, and a circular tube portion 18B integrally formed to an axial center portion of the flange portion 18A.

The flange portion 18A is embedded in the first resin material 13.

On the other hand, the circular tube portion 18B projects from the head 12B toward the container outside and penetrates the strengthening fiber reinforcement layer 20.

A central portion of the circular tube portion 18B is formed with a large diameter hole portion 22A, a female thread 22B, a small diameter hole portion 22C, and a medium diameter hole portion 22D, in sequence from the container outside toward the container inside.

The second mouthpiece member 18 is formed with a large diameter portion 16A, a medium diameter portion 16B, a male thread 16C, and a small diameter portion 16D, in sequence from the container outside toward the container inside.

The medium diameter portion 16B of the first mouthpiece member 16 is inserted inside the large diameter hole portion 22A of the second mouthpiece member 18 so as not to rattle around, and the male thread 16C of the first mouthpiece member 16 is screwed into the female thread 22B of the second mouthpiece member 18. The small diameter portion 16D of the second mouthpiece member 18 is inserted inside the small diameter hole portion 22C of the second mouthpiece member 18 so as not to rattle around.

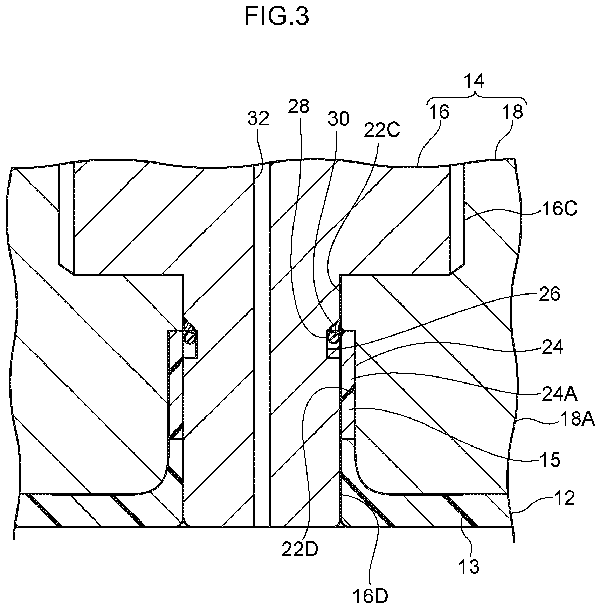

As illustrated in Fig. 3, a circular tube portion 24 that extends in a circular tube shape from the resin liner 12 and is interposed between the medium diameter hole portion 22D of the first mouthpiece member 16 and the small diameter portion 16D of the second mouthpiece member 18.

### At a leading end side of the circular tube portion 24 a circular tube shaped hard portion 24A is integrally formed from the second resin material 15 that is a harder resin than the first resin material 13 configuring the resin liner 12. Note that the circular tube portion 24 is formed when the first mouthpiece member 16 is being inset molded with the resin liner 12.

The second resin material 15 forming the hard portion 24A has a smaller compression deformation amount in use than the first resin material 13 configuring the resin liner 12 when the same pressure acts thereon. As an example, the hard portion 24A may employ a harder resin material than the first resin material 13 configuring the resin liner 12.

The material employed as the first resin material 13 configuring the resin liner 12 has gas barrier properties, and examples of materials that may be employed therefor include a polyethelene (as an example high density polyethylene (HDPE), or linear low density polyethylene (LLDPE)). Note that a synthetic resin other than polyethylene may be employed as the resin liner 12 as long as it has gas barrier properties.

In the present exemplary embodiment, LLDPE is employed as the first resin material 13 configuring the resin liner 12, and a portion thereof facing the interior hollow portion is formed as a single layer of LLDPE.

In the present exemplary embodiment, as an example, SP4030(S) manufactured by Prime Polymer Co., Ltd is employed as the LLDPE. The density of SP4030(S) is 937 kg/m³.

On the other hand, as an example, a polyamide resin (for example Nylon 6, Nylon 66, or the like) is employed in the present exemplary embodiment as the second resin material 15 for forming the hard portion 24A. Note that another synthetic resin other than a polyamide resin may be employed for the second resin material 15 forming the hard portion 24A (for example, a polypropylene resin, a polycarbonate resin, or the like). Moreover, similarly to with the first resin material 13 configuring the resin liner 12, a resin material having gas barrier properties is selected for use as the second resin material 15 forming the hard portion 24A.

The hard portion 24A may, as an example, be molded at the same time as when the first mouthpiece member 16 is insert molded in the resin liner 12, and the second resin material 15 configuring the hard portion 24A and the first resin material 13 may be caused to fuse together so as to enable them to be integrated together as one. Gas is thereby suppressed from leaking out from a joint portion (interface) between the second resin material 15 configuring the hard portion 24A and the first resin material 13.

A ring shaped groove 26 is formed at a female thread side of the small diameter portion 16D of the second mouthpiece member 18. The ring shaped groove 26 includes a constant diameter portion, and a taper portion provided at the male thread 16C side of the constant diameter portion and having a diameter that gets gradually smaller. A seal ring 28 such as an O-ring or the like is fitted onto the constant diameter portion of the ring shaped groove 26. A backup ring 30 having a diameter that reduces toward the container outside is fitted to the taper portion of the ring shaped groove 26.

Note that the position of the ring shaped groove 26, and the position of the hard portion 24A, are decided such that the seal ring 28 is in contact with an inner peripheral face of the hard portion 24A of the circular tube portion 24, and the backup ring 30 is in contact with the small diameter hole portion 22C of the second mouthpiece 14.

As illustrated in Fig. 2 and Fig. 3, a gas pathway 32 is formed at an axial center portion of the second mouthpiece member 18 to pass gas in and out through, and a female thread 34 is formed at a container outside end portion of the gas pathway 32 into which an outlet fitting (omitted in the drawings) provided at a pipe (omitted), boss, or the like is screwed.

### Operation and Advantageous Effects

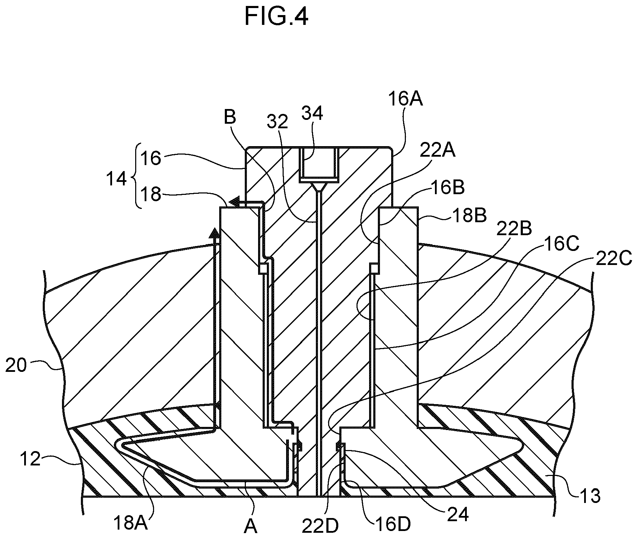

Next description follows regarding operation of the high pressure gas container 10 of the present exemplary embodiment, with a comparison to the comparative example illustrated in Fig. 4.

Note that for a high pressure gas container according to a comparative example, the same reference numerals are appended for configuration that is the same as that of the present exemplary embodiment, and explanation thereof will be omitted

As illustrated in Fig. 4, in a high pressure gas container according to a comparative example, all portions of a circular tube portion 24 are formed with the first resin material (LLDPE) 13, and the seal ring 28 contacts the first resin material 13.

In the high pressure gas container 10 of the present exemplary embodiment, and in the high pressure gas container according to the comparative example, as an example, one of the mouthpieces 14 may be employed for gas filling, and the other of the mouthpieces 14 may be employed for gas discharge.

In cases in which a gas (for example hydrogen gas, helium gas, or the like) has been employed to fill the high pressure gas container 10, gas inside the container reaches as far as the ring shaped groove 26 through a gap between the small diameter portion 16D of the second mouthpiece member 18 and the circular tube portion 24, and the seal ring 28 is provided in the ring shaped groove 26 so that the gas is suppressed from passing through the ring shaped groove 26 and leaking outside of the container.

In the high pressure gas container of the comparative example illustrated in Fig. 4, when a rise in the internal pressure due to filling with gas and a fall in the internal pressure due to using the gas occurs repeatedly, sometimes permanent distortion of the first resin material 13 of the circular tube portion 24 occurs where there is contact with the seal ring 28 and the shape of the circular tube portion 24 no longer returns to the original shape.

The shape of the circular tube portion 24 no longer returning to the original shape leads to a drop in the sealing performance between the seal ring 28 and the circular tube portion 24, gas passes through between the seal ring 28 and the circular tube portion 24, with the passing gas leaking out from the container through between the circular tube portion 24 and the first mouthpiece member 16 (see arrow A), or leaking out from the container through between the first mouthpiece member 16 and the second mouthpiece member 18 (see arrow B).

However, in the high pressure gas container 10 of the present exemplary embodiment, the portion contacted by the seal ring 28 is configured by the hard portion 24A that is formed from a polyamide resin less compressible than the first resin material 13 configuring the resin liner 12.

The hard portion 24A configured from the polyamide resin is not liable to deform when a high pressure acts thereon, enabling a reduction to be achieved in the amount of permanent distortion under repeated rises in internal pressure due to filling with gas and falls in internal pressure due to using the gas. This thereby enables a drop in the sealing performance from the seal ring 28 to be suppressed from occurring.

This means that the high pressure gas container 10 having the structure of the present exemplary embodiment is able to be appropriately employed in applications in which gas is filled at high pressures such as, for example, pressures exceeding 100 MPa.

Note that in the present exemplary embodiment, "high pressure gas" may be a gas having a pressure falling outside of the pressures defined under the Japanese high pressure gas safety law. The high pressure gas container 10 of the present exemplary embodiment may, as an example, be filled with a gas at a pressure of 105 MPa.

### Test Example 1

For a high pressure gas container with a capacity of 30L having a structure of the exemplary embodiment, a leakage test was executed as described in the standard related to composite pressure containers for compressed hydrogen stands of the High Pressure Gas Safety Institute of Japan (KHKS 0225(2019)), with the result that the leakage level was 1/10 that of the technical standard or lower.

Note that the specification of the high pressure gas container employed in the test is as set out below.

| | |
|---|---|
| Capacity: | 30L |
| Outer diameter of resin liner: | 300 mm |
| Thickness of resin liner: | 10 mm |

### Test Example 2

A high pressure gas container of the structure of the present exemplary embodiment illustrated in Fig. 1 to Fig. 3 (in which the location contacted by the seal ring is configured by the hard portion 24A formed from nylon), and a high pressure gas container according to the comparative example illustrated in Fig. 4 (lacking the hard portion 24A, and in which the seal ring contacts polyethylene), were both prepared. A cycle life test according to the standard related to composite pressure containers for compressed hydrogen stands "Validation Test for Fatigue Strength and the like" was performed respectively with the high pressure gas container of the structure of the present exemplary embodiment and with the high pressure gas container according to the comparative example.

The specifications of the high pressure gas containers employed in Test Example 2 were the same as in Test Example 1.

In Test Example 2 and differently to in the "Validation Test for Fatigue Strength and the like" of the High Pressure Gas Safety Institute, the cycle test was continued until leaking developed from the mouthpiece portion, and the numbers of cycles until leakage occurred were compared.

The test results were for the high pressure gas container of the structure of the exemplary embodiment in which the location where the seal ring contacts the resin liner was Nylon. These indicated that the high pressure gas container of the structure of the exemplary embodiment had a greatly extended number of cycles until a leak occurred compared to the high pressure gas container according to the comparative example in which the seal ring contacts polyethylene, and an extension of the cycle life was confirmed.

### Other Exemplary Embodiments

Although the exemplary embodiment of the present disclosure has been described above, the present disclosure is not limited thereto, and obviously various modifications may be implemented within a scope not departing from the spirit of the present disclosure.

Note that the following supplements related to the above description are also disclosed.

### Supplement 1

A high pressure gas container of a supplement 1 includes a resin liner that is formed with a hollow portion for filling gas in an interior thereof, a boss that is provided at the resin liner to fill gas through an interior thereof, a reinforcement layer that covers the resin liner, and a seal ring that is provided at the boss and that contacts the resin liner and seals against the resin liner. The resin liner includes a portion that faces the hollow portion and that is formed from a first resin material, and a location where the seal ring contacts that is formed from a second resin material less liable to undergo compression deformation than the first resin material.

In the high pressure gas container of supplement 1, gas can be filled from the boss into the interior of the resin liner.

The seal ring contacts the resin liner, seals between the resin liner and the boss, and has a function of suppressing leaking of the filled gas.

The first resin material is compressed by a rise in internal pressure due to filling with gas, and the first resin material attempts to return to its original shape when the internal pressure falls due to using the gas, however sometimes a permanent distortion occurs in the first resin material when there is repeated rises in internal pressure and falls in internal pressure.

Due to the first resin material being provided facing the hollow portion filled with gas, the gas barrier properties of the material itself do not fall even in cases in which permanent distortion occurs, and so gas leakage from the portion facing the hollow portion can be sufficiently suppressed.

The seal ring that contacts the resin liner and seals against the resin liner is formed from the second resin material that is less compression-deformable than the first resin material, and so the second resin material deforms less than the first resin material when the pressure of gas acts thereon. This means that even when there are repeated rises in internal pressure and falls in internal pressure, the second resin material is less liable to undergo permanent distortion and any amount of permanent distortion thereof is also suppressed compared to the first resin material, enabling the sealing performance against the seal ring to be suppressed from falling, and enabling gas leakage due to a drop in sealing performance to be suppressed from occurring.

### Supplement 2

A high pressure gas container of a supplement 2 is the high pressure gas container of the supplement 1, wherein the first resin material is LLDPE and the second resin material is a polyamide resin.

The polyamide resin is harder than LLDPE, and so the amount of compression deformation when pressure is acting thereon is less than with LLDPE.

Note that the entire content of the disclosure of Japanese Patent Application No. 2021-165766 filed on October 7, 2021 is incorporated by reference in the present specification.

All publications, patent applications and technical standards mentioned in the present specification are incorporated by reference in the present specification to the same extent as if each individual publication, patent application, or technical standard was specifically and individually indicated to be incorporated by reference.

## Claims

1. A high pressure gas container comprising:
a resin liner that is formed with a hollow portion for filling gas in an interior thereof;
a boss that is provided at the resin liner to fill gas through an interior thereof;
a reinforcement layer that covers the resin liner; and
a seal ring that is provided at the boss, and that contacts the resin liner and seals against the resin liner,
wherein the resin liner includes a portion that faces the hollow portion and that is formed from a first resin material, and a location where the seal ring contacts that is formed from a second resin material less liable to undergo compression deformation than the first resin material.

2. The high pressure gas container of claim 1, wherein:
the first resin material is LLDPE; and
the second resin material is a polyamide resin.
